## Europäisches Patentamt

## European Patent Office

## Office européen des brevets

(19)

(11) Veröffentlichungsnummer: **0 239 114**
**B1**

(12) **EUROPÄISCHE PATENTSCHRIFT**

(45) Veröffentlichungstag der Patentschrift:
06.06.90

(51) Int. Cl.⁵: **B65G 27/02**

(21) Anmeldenummer: 87104516.7

(22) Anmeldetag: 26.03.87

(54) Schwingförderer nach dem Gleitförderprinzip.

(30) Priorität: 26.03.86 DE 3610139

(43) Veröffentlichungstag der Anmeldung:
30.09.87 Patentblatt 87/40

(45) Bekanntmachung des Hinweises auf die Patenterteilung:
06.06.90 Patentblatt 90/23

(84) Benannte Vertragsstaaten:
AT BE CH DE ES FR GB IT LI NL SE

(56) Entgegenhaltungen:
AT-B- 255 966
DE-B- 2 255 024

SOVIET INVENTIONS ILLUSTRATED, Sektion P, Q, Woche 8426, 8. August 1984, Q 35 DERWENT PUBLICATIONS LTD London
BERICHTE AUS DEM INSTITUT FÜR FABRIKANLAGEN (IFA), Reihe 13, Nr. 25, 1984, VDI-Verlag Düsseldorf D. HABENICHT "Grundlagenuntersuchungen zur Werkstückförderung in Schwingzuführsystemen" Seiten 1-19

(73) Patentinhaber: FACTRON Maschinenbaugesellschaft mbH + Co. KG, Salzdahlumer Strasse 196,
D-3300 Braunschweig(DE)

(72) Erfinder: Böhm, Erhard, Bruchkamp 4, D-3301 Walle(DE)
Erfinder: Reissmann, Ulrich, Fasanenstrasse 6,
D-3300 Braunschweig(DE)

(74) Vertreter: Lins, Edgar, Dipl.-Phys. et al, Patentanwälte Gramm + Lins Theodor-Heuss-Strasse 2,
D-3300 Braunschweig(DE)

ACTORUM AG

## Beschreibung

Die Erfindung betrifft einen Schwingförderer nach dem Gleitförderprinzip mit einer Antriebsschwingbewegung für eine Förderrinne, die eine Kopplung zu einer Gegenmasse aufweist, durch die die Bewegung der Förderrinne in Förderrichtung mit einer vertikalen Aufwärtsbewegung und die Rückstellbewegung mit einer vertikalen Abwärtsbewegung verbunden ist, wobei die durch die vertikale Aufwärtsbewegung erzeugte Beschleunigung nicht zu einem Abheben der zu fördernden Teile von der Förderrinne führt, mit einem auf der Gegenmasse montierten Antrieb für die Förderrinne, der eine Beschleunigung in Förderrichtung unter einem Anstellwinkel ($\Psi$) von 45 bis 70° zum Rinnenboden mit einer Frequenz von deutlich unter 25 Hz und einer Bewegungsamplitude von 5 bis 40 mm erzeugt.

Schwingförderer sind in Form von Schwingfördertöpfen seit vielen Jahren bekannt und werden industriell vielfältig zur Zuförderung von Massenteilen verwendet. Die Schwingfördertöpfe weisen an ihrem äußeren Umfang eine gewendelte Bahn auf, auf der die Masseteile vereinzelt und ggf. nach ihrer Lage sortiert werden, so daß sie am oberen Ende der gewendelten Bahn nacheinander in der gewünschten Ausrichtung abnehmbar sind. Die seit vielen Jahren prinzipiell unverändert verwendeten Schwingfördertöpfe weisen einen Antrieb auf, der aus schräggestellten Blattfedern besteht, die am äußeren Umfangskreis des Schwingfördertopfes etwa tangential ausgerichtet sind und die untere Gegenmasse mit dem durch den Schwingfördertopf gebildeten Nutzmasse verbinden. Die Blattfedern stehen unter einem Winkel von 70 bis 80° zur Horizontalen. Ein ursprünglich verwendeter zentral angeordneter Erregermagnet hat sich wegen eines sehr geringen Wirkungsgrades als unzweckmäßig erwiesen. Es sind daher mehrere Erregermagnete am äußeren Umfangskreis des Fördertopfes vorgesehen worden, die etwa senkrecht zur Blattfeder ausgerichtet sind. Mit diesen Schwingfördertöpfen wird den Massenteilen mit einer harmonischen Anregung eine Mikrowurfbewegung mit einem Abwurfwinkel von 10 bis 20° aufgeprägt. Die Mikrowürfe führen zu einer nicht unerheblichen mechanischen Belastung der Massenteile, erzeugen einen erheblichen Lärm und bewirken eine sehr unregelmäßige Förderung, die von einer Vielzahl von nicht beherrschbaren Parametern abhängt. Die Schwingfördertöpfe bedürfen daher einer ständigen Überwachung und Wartung.

Durch die DE-OS 3 331 050 ist versucht worden, die Mikrowurfbewegung durch eine reine Gleitbewegung zu ersetzen. Hierzu wird auf die Förderrinne eine rein horizontale Beschleunigung ausgeübt, die zu einer höheren Geschwindigkeit führt als die durch Federn verursachte Rückstellbewegung (nichtharmonische Anregung). Die in Vorwärtsrichtung stark beschleunigten Teile gleiten beim Abbremsen ein Stück weiter. Da die Rückstellbewegung mit einer geringeren Geschwindigkeit erfolgt, werden die Teile zwar mit der Rückstellbewegung um das Maß der Rückstellbewegung zurückgefördert, gleiten aber nicht, da aufgrund der geringen Geschwindigkeit die Haftreibung nicht überwunden wird. Dieses Förderprinzip wirft erhebliche steuerungstechnische Probleme auf und ist in seiner Einstellung sehr kritisch, da bei der Vorwärtsbewegung selbst die Haftreibung nicht, sondern erst beim Abbremsen überschritten werden darf, während bei der Abbremsung der Rückwärtsbewegung die Haftreibung auch beim Abbremsen erhalten bleiben muß. Die Anwendung dieses Prinzips setzt außerordentlich gut definierte Teile voraus, die in ihrer Lage bereits vorherbestimmt sein müssen, wenn sie nicht allseits gleichmäßig ausgebildet sind. Eine praktische Anwendung dieses Prinzips erscheint daher allenfalls für Spezialfälle möglich.

Durch die Monographie Habenicht «Grundlagenuntersuchungen zur Werkstückgleitförderung in Schwingzuführsystemen», VDI-Verlag 1984, ist ein Schwingförderer nach dem Gleitförderprinzip der eingangs erwähnten Art untersucht worden. Dabei wird der Förderrinne eine harmonische Bewegung aufgeprägt, die das zu fördernde Teil einerseits horizontal in Förderrichtung, andererseits vertikal nach oben (also entgegen der Erdanziehung) beschleunigt. Durch die nach oben gerichtete vertikale Beschleunigung verringert sich die normalkraftabhängige Haftreibung, so daß das Teilchen aufgrund der Horizontalbeschleunigung vorwärts gleiten kann. Wichtige Randbedingung hierbei ist, daß die durch die vertikale Aufwärtsbewegung erzeugte Beschleunigung unter der Erdbeschleunigung bleibt, so daß ein Abheben der Teilchen vermieden wird. Bei der erforderlichen Rückstellbewegung des Schwingantriebs wird gleichzeitig eine vertikal nach unten gerichtete Bewegung ausgeübt, die die Normalkraft auf die Förderrinne und somit die Haftreibung vergrößert. Dadurch läßt sich erreichen, daß während der Vorwärtsbewegung in Förderrichtung das Teil gleitet, während es bei der Rückstellbewegung auf dem Boden der Förderrinne haftet. Zur Erzielung einer derartigen Förderung ist in der genannten Monographie ein Zweikomponentenantrieb angegeben, der die erforderlichen Horizontal- und Vertikal-Komponenten für die Beschleunigung der Förderrinne erzeugt. Der Anstellwinkel für die Bahnbewegung beträgt größenordnungsmäßig 60°. Sie Vibrationsfrequenz liegt wesentlich niedriger als bei herkömmlichen Schwingförderern (25 bis 100 Hz), nämlich bei wenigen Hertz (z.B. 3 bis 5 Hz). Die auf einer beschriebenen Versuchsanordnung realisierte Gleitförderung hat den Vorteil einer erheblichen Teileschonung sowie einer wesentlichen Lärmverminderung. Darüber hinaus entsteht ein relativ gut definierter Förderweg pro Schwingzyklus, so daß die Fördergeschwindigkeit gut definierbar und einstellbar ist.

Durch die SU-A 1 047 791 ist ein Schwingfördertopf bekannt, bei dem eine hyperbolische elastische Hülse, die aus hyperbolisch geformten Federelementen besteht, einerseits mit einer Gegenmasse verbunden ist und andererseits einen Flansch bildet, der seinerseits über eine Federverbindung mit dem Boden des Fördertopfes verbunden ist. Zwischen dem Flansch und dem Boden ist eine pneumatische Dämpferanordnung vorgesehen. Die Schwinganregung erfolgt zwischen der ortsfesten Gegenmasse und dem oberen Flansch der elastischen Hülse. Die Anordnung, bei der der obere Flansch eine schwingende Zwischenmasse bildet, dient dazu, den Schwingtopf einer Schwingung zu unterwerfen, bei der die Bewegungsanregungen in der Vertikalen und in der Winkelbahnrichtung phasenverschoben erfolgen, so daß sich jeder Punkt des Schwingtopfes auf einer elliptischen Bahn bewegt. Die Durchführung einer Gleitförderung ist nicht offenbart.

Der Erfindung liegt die Aufgabe zugrunde, die dem Gleitförderprinzip innewohnenden Vorteile mit einem industriell realisierbaren Schwingförderer erzielbar zu machen.

Diese Aufgabe wird erfindungsgemäß bei einem Schwingförderer der eingangs erwähnten Art dadurch gelöst, daß zusätzlich zu der Kopplung geschwindigkeitsabhängige Dämpfer zwischen der Förderrinne und der Gegenmasse angeordnet sind.

Die erfindungsgemäße Anordnung der geschwindigkeitsabhängigen Dämpfer hat in der Schwingfördertechnik kein Vorbild. Die bekannten, mit höheren Frequenzen arbeitenden Schwingfördertöpfe sind nicht mit Dämpfern bestückt gewesen. Der Erfindung liegen umfangreiche Untersuchungen zugrunde, die gezeigt haben, daß die Realisierung der definierten Gleitbewegung nur vor Vorhandensein eines ausreichenden Dämpfsystems möglich ist. Um eine definierte Dämpfung und damit eine gute Stabilität des Schwingsystems zu erzielen, werden erfindungsgemäß die geschwindigkeitsabhängigen Dämpfer vorgesehen.

Besonders vorteilhaft ist der Einsatz der geschwindigkeitsabhängigen Dämpfer, wenn der Antrieb durch an sich bekannte Blattfedern mit einem oder mehreren Schwingmagneten gebildet ist, wobei die Blattfedern senkrecht zum Anstellwinkel $\Psi$ angeordnet sind. Der Schwingförderer bildet somit ein Masse-Feder-System, das durch die geschwindigkeitsabhängigen Dämpfer stabilisiert ist.

Bei der Ausbildung der Förderrinne des erfindungsgemäßen Schwingförderers als Fördertopf mit einer gewendelten Transportbahn ist es für die Realisierung der Gleitförderung besonders vorteilhaft, wenn die Blattfedern jeweils einen inneren Anlenkungspunkt an dem Fördertopf auf einem inneren Kreis und einen äußeren Anlenkungspunkt an der Gegenmasse auf einen äußeren Kreis aufweisen, wenn die Blattfedern etwa die Richtung der jeweiligen Tangenten am inneren Kreis aufweisen und wenn mindestens einer der Anlenkungspunkte jeder Blattfeder ein Drehgelenk aufweist, das vorzugsweise am oberen Anlenkungspunkt angebracht ist und als Zapfengelenk mit einer Achse senkrecht zum Boden des Fördertopfes ausgebildet ist.

Der Radius des äußeren Kreises ist dabei größenordnungsmäßig 1,5 mal so groß wie der Radius des inneren Kreises, so daß die Blattfeder mit der Tangente am Anlenkungspunkt des äußeren Kreises einen Winkel von ungefähr 50° einschließt.

Durch diese Anordnung wird der Schwingfördertopf in eine rotierende Schwingbewegung versetzt, die die Ausbildung der Gleitbewegung auf der gewendelten Transportbahn des Fördertopfes unterstützt.

Störende Nebenschwingungen werden bei dieser Anordnung vermieden, wenn ein gemeinsamer Erregermagnet in der Achse des Fördertopfes angeordnet ist. Auf diese Weise findet eine gleichmäßige Anregung der Schwingbewegung des Fördertopfes über alle Blattfedern, beispielsweise fünf, statt. Die Ausbildung von die Gleichmäßigkeit der Förderbewegung störenden Überlagerungsschwingungen, die zu Schwingungsknoten und Schwingungsbäuchen führen könnten, läßt sich dadurch vermeiden.

Auch bei einer derartigen Anordnung der Blattfedern sind die Dämpfer vorzugsweise am Umfang eines Teilkreises des Fördertopfes angeordnet und etwa tangential ausgerichtet. Die Dämpfer stehen etwa senkrecht zur Ebene der Blattfedern, so daß sie die durch die Blattfedern auf den Fördertopf aufgeprägte Bewegung mit vollem Wirkungsgrad bedämpfen können. Dabei ist es nicht erforderlich, für jede Blattfeder einen Dämpfer vorzusehen. Vielmehr reicht für einen Schwingfördertopf in der Regel die Anordnung von zwei Dämpfern für ein Antriebssystem mit beispielsweise fünf Blattfedern aus.

Die Erfindung soll im folgenden anhand eines in der Zeichnung dargestellten Ausführungsbeispiels näher erläutert werden. Es zeigen:

Figur 1 - einen Längsschnitt durch die Antriebsanordnung für einen Schwingfördertopf, gezogen entlang der Linie C-D in Figur 2

Figur 2 - eine Draufsicht auf die Antriebsanordnung, gesehen von der Schnittlinie A-B in Figur 1.

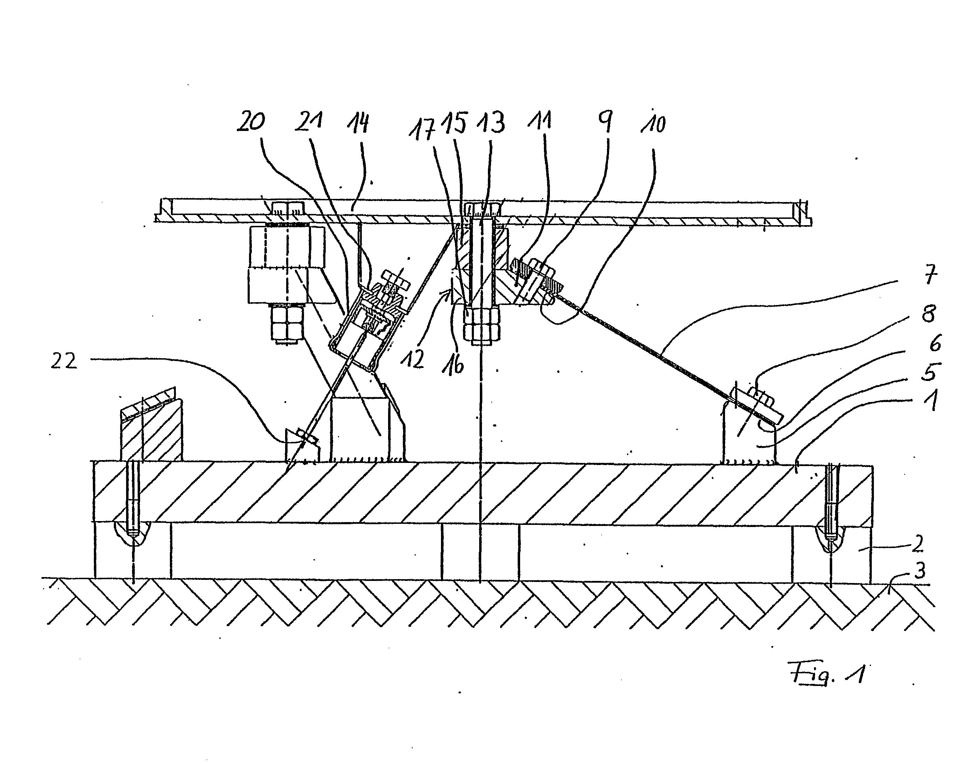

Figur 1 läßt eine kreisrunde Montageplatte 1 erkennen, die mit vier Gummifüßen 2 rutschfest auf einer massiven Stellfläche 3 steht. Auf die Montageplatte 1 sind fünf Befestigungssockel aufgeschweißt, die eine obere, schräggestellte Auflagefläche 6 aufweisen, in die eine Gewindebohrung eingebracht ist. Die Montagesockel 5 befinden sich auf einem äußeren Kreis um den Mittelpunkt der Montageplatte 1. Mittels einer durch eine entsprechende Bohrung einer Blattfeder 7 ragenden Befestigungsschraube 8 ist die Blattfeder mit ihrem unteren Ende an dem Montagesockel 5 befestigt, wobei sie flächig auf der Auflagefläche 6 aufliegt. Die abgeschrägte Auflagefläche 6 definiert somit einen Winkel der Blattfeder 7 mit der Horizontalen. Das andere Ende der Blattfeder 7 ist mittels einer weiteren Befestigungsschraube 9 an einer Auflagefläche 10 eines Ansatzes 11 eines Zapfen-Drehgelenks 12 befestigt. Der Zapfen 13 des Drehgelenks 12 ist fest mit einer Grundplatte 14 eines (nicht dargestellten) Schwingfördertopfes verbunden. Unterhalb der Grundplatte 14 ist der Zapfen durch eine Abstandshülse 15 umgeben, an die sich nach unten ein drehbar auf dem Zapfen 13 gelagertes Buchsenteil 16 mit dem Ansatz 11 anschließt. Das Buchsenteil 16 ist nach unten durch zwei Muttern 17 gesichert.

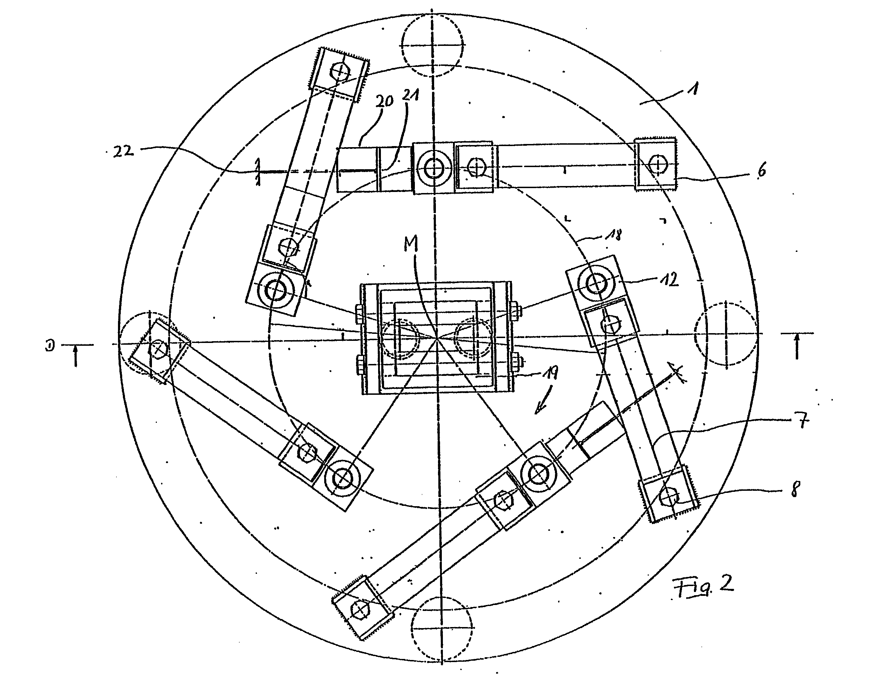

Figur 2 läßt erkennen, daß sich die Drehgelenke 12 auf einem inneren Kreis 18 um den Mittelpunkt M der Montageplatte 1 befinden. Die Blattfedern 7 erstrecken sich mit ihrer Mittelachse etwa in Richtung der Tangente des inneren Kreises 18, die jeweils durch die Drehachse des Drehgelenks 12 läuft. Die Befestigungspunkte der Blattfedern 7 an den Sockeln 6, die durch die Schrauben 8 gebildet sind, liegen auf einem äußeren Kreis, dessen Radius etwa das 1,5fache des Radius des inneren Kreises 18 beträgt. Somit bildet die Mittelachse der Blattfedern 7 mit der den jeweiligen Befestigungspunkt 8 schneidenden Tangente am äußeren Kreis einen Winkel von etwas mehr als 50°.

Im Mittelpunkt M der Montageplatte 1 ist ein Schwingmagnet 19 angeordnet, der die Grundplatte 14 des Schwingfördertopfes periodisch anzieht und so über die Rückstellkräfte der Blattfedern 7 in Schwingung versetzt. Die Schwingfrequenz des Schwingmagneten 19 liegt zwischen 3 und 8 Hz. Aufgrund der Ankoppelung der Grundplatte 14 über die in der beschriebenen Weise angeordneten Blattfedern 7 an der die Gegenmasse darstellenden Grundplatte 1 wird die Grundplatte 14 in eine rotierende Schwingbewegung versetzt, bei der gleichzeitig eine vertikale Auf- und Abbewegung ausgeführt wird. Die Anlagefläche 6 der Montagesockel 5 steht etwa in einem Winkel von 30° zur Horizontalen, so daß auch die Blattfedern 7 mit ihrer Schwingebene diesen Winkel mit der Horizontalen bilden. Die Bewegung der Grundplatte 14 erfolgt senkrecht zu der Schwingebene der Blattfedern 7, so daß eine Aufwärtsbewegung in einem Winkel von etwa 60° zur Horizontalen entsteht. Dieser Aufwärtsbewegung ist die Rotations-Bahnbewegung in Förderrichtung überlagert.

Die Grundplatte 14 ist mit der Montageplatte 1 ferner über zwei Dämpfer 20 verbunden, die als geschwindigkeitsabhängige Luftdämpfer ausgebildet sind. Die Luftdämpfer sind am äußeren Umfang eines Teilkreises der Grundplatte 14 (etwa innerer Kreis 18) angelenkt, wobei sich der obere und der untere Anlenkungspunkt 21, 22 in fast gleichen Abständen vom Mittelpunkt M der Montageplatte 1 befindet.

Die Drehgelenke 12 ermöglichen die gegenüber der tangentialen des äußeren Kreises verdrehten Anordnung der Blattfedern 7, da sie die auf die Grundplatte 14 übertragene Rotationsbewegung aufnehmen. An sich ist die Anordnung eines Zapfenlagers mit einer vertikal stehenden Drehachse nicht ausreichend, da eine weitere Drehkomponente bei der Rotationsbewegung der Grundplatte 14 entsteht. Diese weitere Komponente ist jedoch so gering, daß sie durch das Lagerspiel aufgenommen wird. Es wäre jedoch auch denkbar,statt der Zapfen-Drehgelenke12 Kugelgelenke o. ä. einzusetzen, die einen weiteren Freiheitsgrad haben.

Mit dem dargestellten Schwingförderer lassen sich Massenteile mit einer definierten Geschwindigkeit und einem gegenüber herkömmlichen Schwingfördertöpfen um Größenordnungen reduzierten Lärm vorfördern. Die Störanfälligkeit ist wesentlich verringert, weil die Teile keiner Wurfbewegung mehr unterworfen werden.

## Patentansprüche

1. Schwingförderer nach dem Gleitförderprinzip mit einer Antriebsschwingbewegung für eine Förderrinne, die eine Kopplung (7) zu einer Gegenmasse (1) aufweist, durch die die Bewegung der Förderrinne in Förderrichtung mit einer vertikalen Aufwärtsbewegung und die Rückstellbewegung mit einer vertikalen Abwärtsbewegung verbunden ist, mit einem auf der Gegenmasse (1) montierten Antrieb für die Förderrinne, der eine Beschleunigung in Förderrichtung unter einem Anstellwinkel (Ψ) von 45 bis 70° zum Rinnenboden mit einer Frequenz von deutlich unter 25 Hz und einer Bewegungsamplitude von 5 bis 40 mm erzeugt, dadurch gekennzeichnet, daß zusätzlich zu der Kopplung (7) geschwindigkeitsabhängige Dämpfer (20) zwischen der Förderrinne (14) und der Gegenmasse (1) angeordnet sind.

2. Schwingförderer nach Anspruch 1, dadurch gekennzeichnet, daß der Antrieb durch an sich bekannte Blattfedern (7) mit einem oder mehreren Schwingmagneten (19) gebildet ist, wobei die Blattfedern (7) senkrecht zum Anstellwinkel (Ψ) angeordnet sind.

3. Schwingförderer nach Anspruch 2, dadurch gekennzeichnet, daß die Förderrinne (14) als Fördertopf mit einer gewendelten Transportbahn ausgebildet ist, daß die Blattfedern (7) jeweils einen inneren Anlenkungspunkt an dem Fördertopf (14) auf einem inneren Kreis (18) und einen äußeren Anlenkungspunkt an der Gegenmasse (1) auf einem äußeren Kreis aufweisen, daß die Blattfedern (7) etwa in Richtung der jeweiligen Tangenten am inneren Kreis (18) ausgerichtet sind und daß mindestens einer der Anlenkungspunkte jeder Blattfeder (7) ein Drehgelenk (12) aufweist.

4. Schwingförderer nach Anspruch 3, dadurch gekennzeichnet, daß das Drehgelenk (12) am oberen Anlenkungspunkt angebracht und als Zapfengelenk mit einer Achse senkrecht zum Boden des Fördertopfes (14) ausgebildet ist.

5. Schwingförderer nach Anspruch 3 oder 4, dadurch gekennzeichnet, daß ein gemeinsamer Erregermagnet (19) in der Achse des Fördertopfes (14) angeordnet ist.

6. Schwingförderer nach einem der Ansprüche 3 bis 5, dadurch gekennzeichnet, daß die Dämpfer (20) zu der Schwingebene der Blattfedern (7) etwa im Winkel von 90° stehen.

## Claims

1. Vibrating conveyor according to the sliding transport principle with a driving oscillatory movement for a conveyor trough, which comprises a coupling (7) to a counterweight (1), by which the movement of the conveyor trough in the conveying direction is combined with a vertical upwards movement and the return movement is combined with a vertical downwards movement, with a drive for the conveyor trough mounted on the counterweight (1), which produces an acceleration in the conveying direction at an angle of incidence (Ψ) of 45 to 70° with respect to the trough base at a frequency of clearly below 25 Hz and a movement amplitude of 5 to 40 mm, characterised in that in addition to the coupling (7), speed-dependent shock-absorbers (20) are disposed between the conveyor trough (14) and the counterweight (1).

2. Vibrating conveyor according to claim 1, characterised in that the drive is formed by leaf springs (7) known per se with one or more oscillating magnets (19), the leaf springs (7) being disposed perpendicularly to the angle of incidence (Ψ).

3. Vibrating conveyor according to claim 2, characterised in that the conveyor (14) is constructed as a conveying container with a spiral conveying path, that the leaf springs (7) respectively comprise an inner pivotal point on the conveying container (14) on an inner circle (18) and a outher pivotal point on the counterweight (1) on an outer circle, that the leaf springs (7) are aligned approximately in the direction of the respective tangent to the inner circle (18) and that at least one of the pivotal points of each leaf spring (7) comprises a swivel joint (12).

4. Vibrating conveyor according to claim 3, characterised in that the swivel joint (12) is located at the upper pivotal point and is constructed as a pivot joint with an axis perpendicular to the base of the conveying container (14).

5. Vibrating conveyor according to claim 3 or 4, characterised in that a common excitation magnet (19) is disposed along the axis of the conveying container (14).

6. Vibrating conveyor according to one of claims 3 to 5, characterised in that the shock absorbers (20) are approximately at an angle of 90° with respect to the oscillating plane of the leaf springs (7).

## Revendications

1. Transporteur vibrant selon le principe du transport par glissement produisant un mouvement vibrant d'entraînement pour une goulotte transporteuse, qui présente un couplage (7) à une contre-masse (1), par lequel le mouvement de la goulotte transporteuse dans la direction de transport est lié à un mouvement montant vertical et le mouvement de retour est lié à un mouvement descendant vertical, comportant un dispositif d'entraînement pour la goulotte transporteuse monté sur la contre-masse (1) qui produit une accélération dans la direction de transport sous un angle d'incidence (Ψ) de 45 à 70° par rapport au fond de la goulotte avec une fréquence nettement inférieure à 25 Hz et une amplitude de mouvement de 5 à 40 mm, caractérisé en ce qu'en plus du couplage (7), des amortisseurs (20) dépendant de la vitesse sont installés entre la goulotte transporteuse (14) et la contre-masse (1).

2. Transporteur vibrant suivant la revendication 1, caractérisé en ce que le dispositif d'entraînement est formé par des ressorts à lame (7) connus avec un ou plusieurs aimants vibrateurs (19), les ressorts à lame (7) étant disposés perpendiculairement à l'angle d'incidence (Ψ).

3. Transporteur vibrant suivant la revendication 2, caractérisé en ce que la goulotte transporteuse (14) a la forme d'une enceinte transporteuse à piste de transport hélicoïdale, que les ressorts à lame (7) présentent chacun un point d'articulation intérieur à l'enceinte transporteuse (14), sur un cercle intérieur (18), et un point d'articulation extérieur à la contre-masse (1), sur un cercle extérieur, que les ressorts à lame (7) sont orientés en substance dans une direction tangentielle au cercle intérieur (18) et qu'au moins un des points d'articulation de chaque ressort à lame (7) comporte une articulation tournante (12).

4. Transporteur vibrant suivant la revendication 3, caractérisé en ce que l'articulation tournante (12) est placée au point d'articulation supérieur et a la forme d'une articulation à pivot présentant un axe perpendiculaire au fond de l'enceinte transporteuse (14).

5. Transporteur vibrant suivant la revendication 3 ou 4, caractérisé en ce qu'un aimant d'excitation commun (19) est placé dans l'axe de l'enceinte transporteuse (14).

6. Transporteur vibrant suivant l'une quelconque des revendications 1 à 5, caractérisé en ce que les amortisseurs (20) forment un angle d'environ 90° avec le plan de vibration des ressorts à lame (7).

Fig. 1

EP 0 239 114 B1

Fig. 2